# EUROPÄISCHE PATENTSCHRIFT

(11) **EP 1 063 401 B1**
(45) Veröffentlichungstag und Bekanntmachung des Hinweises auf die Patenterteilung: **04.08.2004**
(21) Anmeldenummer: 00810505.8
(22) Anmeldetag: 13.06.2000
(51) Int. Cl.: F02C 7/224, F02C 7/25

(54) **Apparat und Verfahren zur Gas-Flüssigkeits-Trennung**
Apparatus and method for separating gas from liquid
Appareil et procédé pour séparer l'air d'un liquide

(30) Priorität: 25.06.1999 EP 99810558
(43) Veröffentlichungstag der Anmeldung: 27.12.2000
(73) Patentinhaber: ALSTOM Technology Ltd, 5400 Baden (CH)
(72) Erfinder: Blangetti, Francisco, Dr., 5400 Baden (CH); Döhler, Stephan Werner, Dr., 8965 Berikon (CH); Liebig, Erhard, Dr., 79725 Laufenburg (DE); Schlageter, Rainer, 71120 Grafenau (DE)

(56) Entgegenhaltungen:
- EP-A- 0 918 151
- WO-A-97/03281
- US-A- 4 373 379
- US-A- 5 139 082
- US-A- 5 255 505
- PATENT ABSTRACTS OF JAPAN vol. 006, no. 221 (P-153), 5. November 1982 (1982-11-05) & JP 57 125337 A (NITSUSHIN SEIKOU KK), 4. August 1982 (1982-08-04)

## Beschreibung

### Technisches Gebiet

Die Erfindung betrifft ein Brennstoffsystem für eine Gasturbinenanlage, das einen Wärmeübertrager zur Kühlung und/oder einen Wärmeübertrager zur Erwärmung von gasförmigem Brennstoff aufweist, wobei das Kühl- oder Heizmedium Wasser ist, das in einem Wasserkreislauf fliesst. Die Erfindung betrifft insbesondere einen Gas-Flüssigkeits-Trennapparat in diesem Wasserkreislauf und ein Verfahren zur Abscheidung von Gas aus solchem Wasser. Der Trennapparat dient der Abscheidung von Gas aus dem Wasser sowie der Detektion der aus dem Wasser abgeschiedenen Gase und damit der Erhöhung der Betriebssicherheit des Systems. Als Brennstoff wird im folgenden ein gasförmiger Brennstoff, wie zum Beispiel CH₄, C₂H₆, CO, H₂ oder ein Gasgemisch bezeichnet.

### Stand der Technik

Gasförmiger Brennstoff, der für eine Gasturbinenanlage bestimmt ist, wird in der Regel von der Erdgaszuleitung kommend zunächst durch ein Brennstoffsystem geleitet, in dem die für die nachfolgende Verbrennung erforderlichen Parameter des Brennstoffs geregelt werden.
In der Erdgaszuleitung ergeben sich zum Beispiel zeitliche Druckschwankungen des Brennstoffs. Um diese Schwankungen auszugleichen, wird der Druck im Brennstoffsystem entsprechend erhöht oder reduziert. Nach einer Druckreduzierung kann der Brennstoff beispielsweise eine Temperatur aufweisen, welche eine Vereisung von Ventilen oder eine Schädigung anderer Bauteile der Anlage bewirken könnte. Um dem vorzubeugen wird der Brennstoff beispielsweise in einem Wärmeübertrager, einem sogenannten Taupunktheizer, bereits vor der Druckreduzierung erwärmt. Für derartige Taupunktheizer wird zum Beispiel Heisswasser als Heizmedium eingesetzt.
Ferner kann ein derartiges Brennstoffsystem zur Erhöhung oder Optimierung des Wirkungsgrades der Gasturbinenanlage eingesetzt werden. Hierzu wird der Brennstoff in einem Wärmeübertrager auf eine vorgegebene Temperatur vorgewärmt.
Ein System zur Erwärmung des Brennstoffs zwecks Erhöhung oder Optimierung des Wirkungsgrades der Gasturbinenanlage ist beispielsweise in der EP 0 918 151 offenbart. Dort wird der Brennstoff durch die Rohre eines Wärmeübertragers geführt, welche von Wasser als Heizmedium umströmt werden, das in einem Wasserkreislauf fliesst und in einem Abhitzekessel einer Gasturbinenanlage vorgewärmt worden ist. Dabei ist insbesondere der Druck des Brennstoffs höher als der des Wassers.

Zur Regelung eines Gaskompressors etwa in einem Lastbereich unterhalb 80% wird der nicht zur Gasturbinenanlage gehende Massenstromanteil rezirkuliert und damit erneut dem Kompressoreintritt zugeführt. In der Rezirkulationsleitung ist ein Wärmeübertrager geschaltet, in dem der Brennstoff mittels Wasser gekühlt wird. Dadurch wird eine Aufheizung des Kompressors im Rezirkulationsbetrieb vermieden.
Der Brennstoff wird hierzu durch die Rohre des Wärmeübertragers geleitet, welche von Kühlwasser umströmt werden. Das Kühlwasser wird mittels einer Förderpumpe durch einen Kühlwasserkreislauf gepumpt, der im wesentlichen aus der Förderpumpe, dem Wärmeübertrager, einem Wasser-Wasserkühler und einem Gas-Flüssigkeits-Trennapparat besteht. In dem Wärmeübertrager zur Kühlung des Brennstoffs ist der Druck des Brennstoffs bedeutend höher als jener des Kühlwassers.

Da in beiden oben beschriebenen Wärmeübertragern, zur Kühlung sowie zur Erwärmung des Brennstoffes mittels Wasser, der Druck des Brennstoffes höher ist als der des Wassers, besteht die Gefahr, dass eine Leckage eintritt, wobei Brennstoff in das Wasser gelangt. Dadurch ergibt sich eine Zweiphasenströmung im Wasserkreislauf, welche ein Sicherheitsrisiko für den Betrieb der Anlage darstellt. Zum Beispiel besteht bei einer Mischung mit Luft am Ansaugstutzen der Förderpumpe die Gefahr einer Entzündung oder Explosion. Ferner kann es zu einem Trockenlaufen oder einer Kavitation der Förderpumpe kommen. Deshalb ist es sehr wichtig, dass Gasleckagen frühzeitig erkannt werden, um grössere Schäden im System zu vermeiden.
Um das Gefahrenrisiko einzuschränken, wird in dem Wasserkreislauf nach dem Wärmeübertrager ein Gas-Flüssigkeits-Trennapparat geschaltet, hier kurz Trennapparat genannt. Er dient der Abscheidung von im Wasser enthaltenen Gasen sowie der Detektion der aus dem Wasser abgeschiedenen Gase. Es handelt sich dabei in erster Linie um Methan, Wasserstoff sowie weitere brennbare Gase. Hierfür werden die Gase über eine Gasentnahmeleitung einem Gasdetektor, zum Beispiel einem Massenspektrometer, zugeführt. Bei einer messbaren Gaskonzentration wird sodann eine entsprechende Warnung abgegeben, sodass notwendige Gegenmassnahmen unternommen werden können.

Herkömmliche Trennaparate, die gegenwärtig zum Einsatz kommen, besitzen keinen definierten Wasserspiegel als freie Oberfläche im Trennapparat selber, an dem die im Wasser mitgetragenen Gasblasen entweichen und in eine Gasentnahmeleitung gelangen können. Deshalb ist die Abscheidung und Detektion der Gase nicht ausreichend gewährleistet, sodass eine zuverlässige Früherkennung einer Leckage nicht möglich ist.

### Darstellung der Erfindung

Angesichts des erwähnten Standes der Technik ist es die Aufgabe der Erfindung, einen Gas-Flüssigkeits-Trennapparat für einen Wasserkreislauf eines Brennstoffsystems für eine Gasturbinenanlage und ein Verfahren zur Abscheidung von Gas aus dem Wasser zu schaffen, durch welche die Abscheidung von gasförmigem Brennstoff aus dem Wasser verbessert ist, sodass die Zuverlässigkeit der Gasdetektion erhöht und somit das Gefahrenrisiko für den Betrieb des Wasserkreislaufs eines Brennstoffsystems reduziert ist.

Diese Aufgabe wird gemäss Anspruch 1 durch einen Gas-Flüssigkeits-Trennapparat in einem Wasserkreislauf eines Brennstoffsystems für eine Gasturbinenanlage gelöst, der einen Behälter mit einem Wassereinlauf und einem Wasserauslauf aufweist sowie eine Gasentnahmeleitung, die zu einem Gasdetektor führt. Der Trennapparat ist gemäss der Erfindung im Innern seines Behälters durch eine Trennwand in eine Wassereintrittskammer und eine Wasseraustrittskammer aufgeteilt, welche mindestens im oberen Bereich des Behälters hydraulisch miteinander verbunden sind, sodass in der Wassereintrittskammer ein vom Wassereinlauf nach oben fliessender Volumenstrom erzeugt wird. Dieser Volumenstrom fliesst sodann von der Wassereintrittskammer in die Wasseraustrittskammer und von dort in den Wasserauslauf. Weiter weist der Behälter insbesondere im Bereich seines oberen Abschlusses eine Leitung auf zur Zufuhr eines Gases in den Behälter, das über dem Wasser einen Raum füllt, wodurch das Wasser im Behälter eine freie Oberfläche aufweist.

Die Aufteilung des Behältervolumens in eine Wassereintritts- und eine Wasseraustrittskammer bezweckt die Bildung einer Beruhigungsstrecke oder calming section" in der Wassereintrittskammer, an der Gas aus dem Wasser abgeschieden werden kann, und einen Wasserauslauf in der Wasseraustrittskammer, der von der Beruhigungsstrecke getrennt ist. Dabei wird die freie Oberfläche durch den Druck im gasgefüllten Raum erzwungen. Durch die hydraulische Verbindung im oberen Bereich der beiden Wasserkammem wird in der Wassereintrittskammer ein nach oben strömender Volumenstrom erzeugt, mit dem im Wasser disperse Gasblasen aufsteigen. Die Beruhigungsstrecke bezweckt ferner eine nach oben gerichtete, wirbelfreie Wasserströmung mit einem homogenen Geschwindigkeitsprofil. Dies wird bei geeigneter Kanalführung und niedrigen Reynoldszahlen, für Wasser beispielsweise Re<700 erreicht. An der freien und ruhigen Oberfläche der Beruhigungsstrecke können die Gasblasen ungestört aus dem Wasser in den darüberliegenden gasgefüllten Raum entweichen. Dabei ist das in diesen Raum zugeführte Gas von den Gasen aus dem Wasser verschieden. Die von der Wassereintrittskammer getrennte Wasseraustrittskammer ermöglicht einen drallfreien Wasserauslauf, wodurch möglichst wenig Gasblasen in den Wasserauslauf mitgerissen werden.

In einer bevorzugten Ausführung sind die beiden Wasserkammern in ihrem oberen Bereich wie folgt hydraulisch verbunden.
Die Trennwand, welche die beiden Kammern voneinander trennt, ist mit dem Boden des Behälters dicht verbunden. Zwischen dem oberen Rand der Trennwand und dem oberen Abschluss des Behälters besteht ein freier Raum. Das in der Wassereintrittskammer nach oben strömende Wasser fliesst über den Rand der Trennwand in der Art eines Überlaufwehrs in die Wasseraustrittskammer. Dank der grossen Breite des Überlaufwehrs herrschen in der Beruhigungsstrecke geringe Querströmungen, sodass eine geringe Anzahl Gasblasen von solchen Strömungen in die Wasseraustrittskammer mitgerissen werden. Der Grossteil der emporgestiegenen Gasblasen entweicht stattdessen ungestört in den gasgefüllten Raum.

In einer Variante besteht die hydraulische Verbindung zwischen den beiden Wasserkammern aus einer oder mehreren Öffnungen im oberen Bereich der Trennwand.

In einer vorteilhaften Ausführung der Erfindung weist die Trennwand des Gas-Flüssigkeits-Trennapparats im Bereich des Bodens des Behälters mehrere Öffnungen auf, durch die Wasser von der Wassereintrittskammer in die Wasseraustrittskammer strömen kann. Durch diese Öffnungen wird der Wasserstrom in der Wassereintrittskammer in einen kleineren nach unten und einen grösseren nach oben fliessenden Volumenstrom aufgeteilt. Die Öffnungen sichern eine zusätzliche hydraulische Verbindung zwischen den beiden Wasserkammern und ermöglichen die Steuerung der Strömungsteilung und des Wasserspiegels in der Wassereintrittskammer.
Die zusätzliche hydraulische Verbindung zwischen den beiden Wasserkammern gewährleistet ferner einen hydrostatischen Druckausgleich auch bei Stillstand.

In einer weiteren Ausführung weist der Trennapparat in der Leitung für die Zufuhr des Gases in den Behälter ein Druckventil und in der Wasseraustrittskammer ein Niveaumessgerät auf. Diese dienen der Regelung des Wasserniveaus in der Wasseraustrittskammer, indem der Gasdruck im gasgefüllten Raum gemäss einem Sollwert für das Wasserniveau geregelt wird, wobei der Wasserspiegel in der Wasseraustrittskammer auf einer Höhe unter der Oberkante der Trennwand gehalten wird.

Für den Fall einer plötzlichen grösseren Gasleckage, beispielsweise im Fall von Rohrrissen, weist der Behälter an seinem oberen Abschluss ein Sicherheitsventil auf, über welches Gas ins Freie entweichen kann, sodass der Behälterdruck in einem zulässigen Bereich bleibt.

In einer bevorzugten Ausführung des Trennapparates ist die Trennwand zwischen den beiden Kammern in ihrem horizontalen Querschnitt in einer V-Form gewinkelt. Der kleinere, innere Winkel der V-förmigen Trennwand ist der Wasseraustrittskammer zugewandt, wobei die innere Seite der V-förmigen Trennwand zusammen mit der Behälterinnenwand die Wasseraustrittskammer bildet. Der grössere, äussere Winkel der V-förmigen Trennwand ist der Wassereintrittskammer zugewandt, wobei die äussere Seite der V-förmigen Trennwand zusammen mit der Behälterinnenwand die Wassereintrittskammer umschliesst. Bei entsprechendem Einbau besitzt die Wassereintrittskammer somit ein grösseres Volumen als die Wasseraustrittskammer. Ferner verleiht die V-Form der Trennwand eine erhöhte Steifigkeit, sodass sie Strömungsbelastungen wie zum Beispiel Stössen oder sogenanntem water hammering" besser widerstehen kann. Zusätzlich ermöglicht die V-form der Trennwand für einen gegebenen Behälterquerschnitt eine Vergrösserung der Überlaufbreite des Überlaufwehrs.

In einer Variante dieser Ausführung weist die Trennwand eine zick-zack-förmige Wehrlinie aus, wodurch die Überlaufbreite des Wehrs zusätzlich vergrössert wird.

In einer weiteren Ausführung ist die Trennwand in der Form eines Zylindermantels gestaltet.

Die Wasseraustrittskammer ist in einer bevorzugten Ausführung so gestaltet, dass eine drallfreie Strömung in Richtung Wasserauslaufrohr erzielt wird. In einer Ausführung weist die Wasseraustrittskammer zur Beruhigung des Auslaufs Einbauten auf. In einer weiteren Ausführung ist der Auslauf durch ein einschenkliges oder zweischenkliges U-Rohr realisiert, wobei der eine Schenkel des U-Rohrs in die Wasseraustrittskammer ragt und der andere sich ausserhalb des Behälters befindet.

Der Behälter weist ferner im Bereich des Behälterbodens einen Drainagestutzen zwecks einer Stillstandsentleerung auf.

In einem Verfahren gemäss Anspruch 12 wird zur Abscheidung von Gas aus dem Wasser eines Wasserkreislaufs in dem eingangs beschriebenen Brennstoffsystem zunächst das Wasser in einen Behälter geleitet, wo es in einer Wassereintrittskammer mit gleichmässiger Geschwindigkeit nach oben strömt und dabei Gasblasen mitführt. Die Gasblasen entweichen in der Wassereintrittskammer an der freien Oberfläche einer Beruhigungsstrecke aus dem Wasser in einen gasgefüllten Raum über der Wasseroberfläche, wobei die freie Oberfläche durch den Gasdruck in diesem Raum erzwungen wird. Das Wasser fliesst über eine hydraulische Verbindung in eine Wasseraustrittskammer, die von der Wassereintrittskammer durch eine Trennwand getrennt ist und strömt in der Wasseraustrittskammer drallfrei in einen Wasserauslauf.

Ein ungestörter Aufstieg der Gasblasen in der Wassereintrittskammer zur Wasseroberfläche wird durch ein möglichst grosses Volumen der Wassereintrittskammer und eine dadurch möglichst geringe Aufstiegsgeschwindigkeit des Wassers bewirkt. An der Wasseroberfläche der Beruhigungsstrecke entweichen die Gasblasen in den gasgefüllten Raum. Durch ein möglichst breites Überlaufwehr werden die Querströmungen in der Beruhigungsstrecke verringert, wodurch die Oberfläche möglichst ruhig ist und die Gasblasen besser aus dem Wasser entweichen können. Es wird dadurch vermieden, dass Gasblasen in die Wasseraustrittskammer mitgerissen und nicht detektiert werden.

Der Höhe des Wasserspiegels des Wehrs in der Wassereintrittskammer ist abhängig vom einströmenden Volumenstrom des Wassers und der Überlaufbreite des Überlaufwehrs. Das Niveau in der Wasseraustrittskammer wird durch den Druck des Gases im gasgefüllten Raum geregelt, wobei der Wasserspiegel in der Wasseraustrittskammer unter der Oberkante der Trennwand gehalten wird. Hierzu wird über ein Ventil die Gaszuströmung und der Gasdruck im gasgefüllten Raum gemäss einem Sollwert für das Wasserniveau in der Wasseraustrittskammer geöffnet und geschlossen. Eine Änderung der Höhe dieses Wasserspiegels bewirkt eine Änderung des treibenden Druckgefälles über den Öffnungen im Bereich des Behälterbodens und zugleich auch der Volumenstromaufteilung. Die für die Öffnungen wirksame Druckdifferenz ist dabei durch die Summe der Überlaufhöhe des Wehrs in der Wassereintrittskammer und der Niveauhöhe der Wasseraustrittskammer begrenzt.

Die Grösse der Öffnungen in der Trennwand wird gemäss der gewünschten Volumenstromaufteilung zwischen dem nach oben und nach unten fliessenden Wasserstrom sowie gemäss den gewünschten Geschwindigkeiten für die beiden Wasserströme bestimmt. Sie werden insbesondere so bemessen, dass die Geschwindigkeit des nach unten resultierenden Wasserstroms die Aufstiegsgeschwindigkeit der kleinsten zu trennenden Gasblasen nicht übersteigt. Der kritische Durchmesser dieser Gasblasen bei einer gewählten nach unten gerichteten Wassergeschwindigkeit von 0.01 m/s ist 130 µm. Damit gelangen bei dieser Auslegung Gasblasen, die grösser als 130 µm sind, nach oben zur Wasseroberfläche.

### Kurze Beschreibung der Zeichnungen

Es zeigen:
Figur 1a ein Schema eines Wasserkreislaufes mit einem erfindungsgemässen Gas-Flüssigkeits-Trennapparat und einem Wärmeübertrager zur Kühlung von gasförmigem Brennstoff für eine Gasturbinenanlage,
Figur 1b ein Schema eines Wasserkreislaufes mit einem erfindungsgemässen Gas-Flüssigkeits-Trennapparat und einem Wärmeübertrager zur Erwärmung von gasförmigem Brennstoff für eine Gasturbinenanlage,
Figur 2a einen Gas-Flüssigkeits-Trennapparat gemäss der Erfindung,
Figur 2b einen horizontalen Querschnitt des Trennapparats von Figur 2a,
Figur 3 eine Darstellung der massgebenden Dimensionen des Überlaufwehrs von der Wassereintrittskammer zur Wasseraustrittskammer des Trennapparats.

### Wege der Ausführung der Erfindung

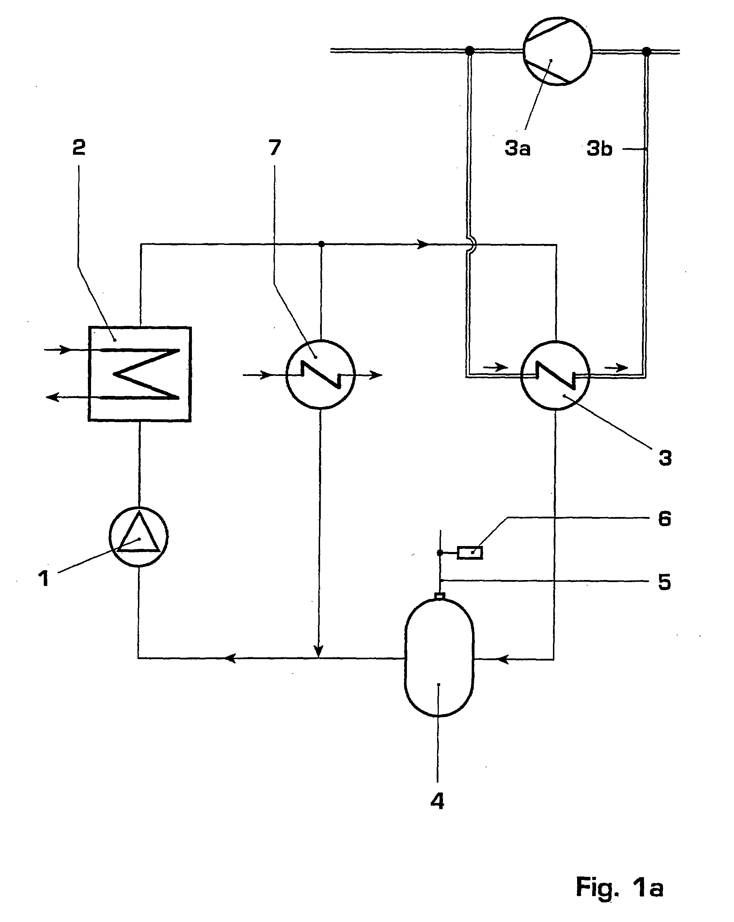

Figur 1a zeigt einen typischen Kühlwasserkreislauf, der nach dem Stand der Technik sowie bei der vorliegenden Erfindung zur Kühlung des gasförmigen Brennstoffs in der Rezirkulationsleitung eines Gaskompressors 3a innerhalb des Brennstoffsystems einer Gasturbinenanlage eingesetzt wird.
Das Kühlwasser wird mit Hilfe einer Förderpumpe 1 durch den Kreislauf gepumpt. Das Kühlwasser durchfliesst nach der Förderpumpe 1 zunächst einen ersten Wärmeübertrager, nämlich einen Wasser-Wasserkühler 2, worin das Kühlwasser unter Wärmeabgabe auf eine zur Kühlung des Brennstoffs erforderliche Temperatur abgekühlt wird. Es wird sodann einem zweiten Wärmeübertrager, einem Erdgaswärmeübertrager 3, zugeführt. Im Rezirkulationsbetrieb wird gasförmiger Brennstoff nach dem Austritt aus dem Gaskompressor 3a über eine Leitung 3b zum Erdgaswärmeübertrager 3 geführt, wo der Brennstoff unter Wärmeabgabe an das Kühlwasser gekühlt wird. Hier ist beispielsweise der Druck des Wassers 3-5 bar, jener des verdichteten Brenngases 20-50 bar. Aufgrund dieses Druckunterschieds können Leckagen von Brennstoff in den Kühlwasserkreislauf entstehen, welche die eingangs erwähnten Sicherheitsrisiken für die Anlage darstellen. Das Kühlwasser wird deshalb nach dem Erdgaswärmeübertrager 3 einem Gas-Flüssigkeits-Trennapparat 4, kurz Trennapparat, zugeführt. Dieser ist mit einer Gasentnahmeleitung 5 ausgerüstet, über welche aus dem Kühlwasser abgeschiedene Gase einem Gasdetektor 6 zuführt werden. Sollte von diesem Gasdetektor ein gasförmiger Brennstoff detektiert werden, wird eine entsprechende Meldung abgegeben, sodass Sicherheitsmassnahmen unternommen werden können.
Nach dem Trennapparat 4 strömt das Kühlwasser zur Förderpumpe 1, wodurch der Kreislauf geschlossen ist. Dem Erdgaswärmeübertrager 3 können auch weitere Apparate parallel geschaltet werden, wie zum Beispiel ein Wärmeübertrager 7 für die Kühlung von Wasserstoff für den Generator der Gasturbinenanlage. Die Erfindung ist damit prinzipiell nicht auf den Einsatz hinsichtlich der Detektion brennbarer Gase beschränkt.

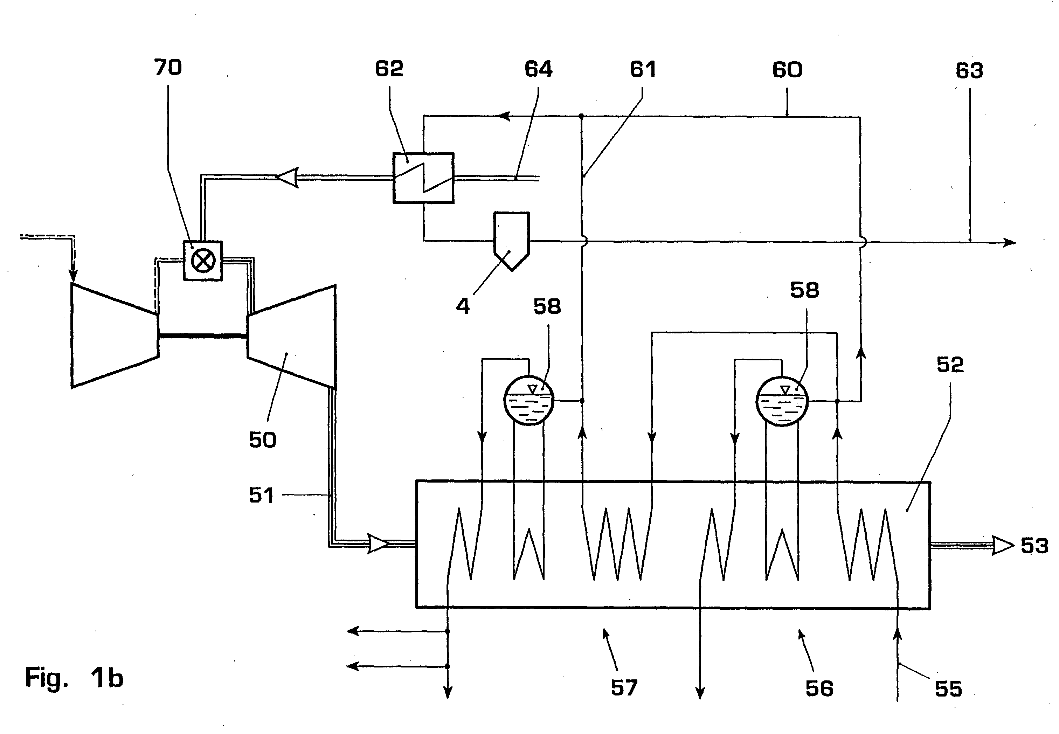

Figur 1b zeigt eine Gasturbinenanlage mit einer Brennkammer 70 und einer Gasturbine 50, deren Abgase über eine Abgasleitung 51 einem Abhitzekessel 52 zugeführt werden. Nach Durchlaufen des Abhitzekessels 52 gelangen die Abgase über einen Kamin 53 in die Atmosphäre. Eine Speisewasserleitung 55 führt Speisewasser in den Abhitzekessel 52 mit einem Niederdruckbereich 56 und einem Hochdruckbereich 57, in welchem das Speisewasser vorgewärmt, verdampft und überhitzt wird. Nach der Vorwärmung im Niederdruckbereich kann als eine erste Möglichkeit ein Teil des Wassers über eine erste Leitung 60 für den Wasserkreislauf für die Erwärmung von Brennstoff abgezweigt werden. Eine zweite Leitung 61 kann als eine weitere Möglichkeit einen Teil des im Hochdruckbereich vorgewärmten Wassers ebenfalls für den Wasserkreislauf abzweigen. Die Leitungen 60 und 61 führen das warme Wasser durch den Wärmeübertrager 62, wo sie die Rohre mit dem Brennstoff umströmen. Nach dem Wärmeübertrager 62 ist in dem Wasserkreislauf ein Gas-Flüssigkeits-Trennapparat 4 geschaltet, wonach das Wasser schliesslich über eine Rücklaufleitung 63 zurück in das Speisewassersystem fliesst. Der gasförmige Brennstoff wird zur Erwärmung über die Brennstoffleitung 64 in den Wärmeübertrager 62 geleitet, wonach er der Brennkammer 70 der Gasturbinenanlage zugeführt wird.

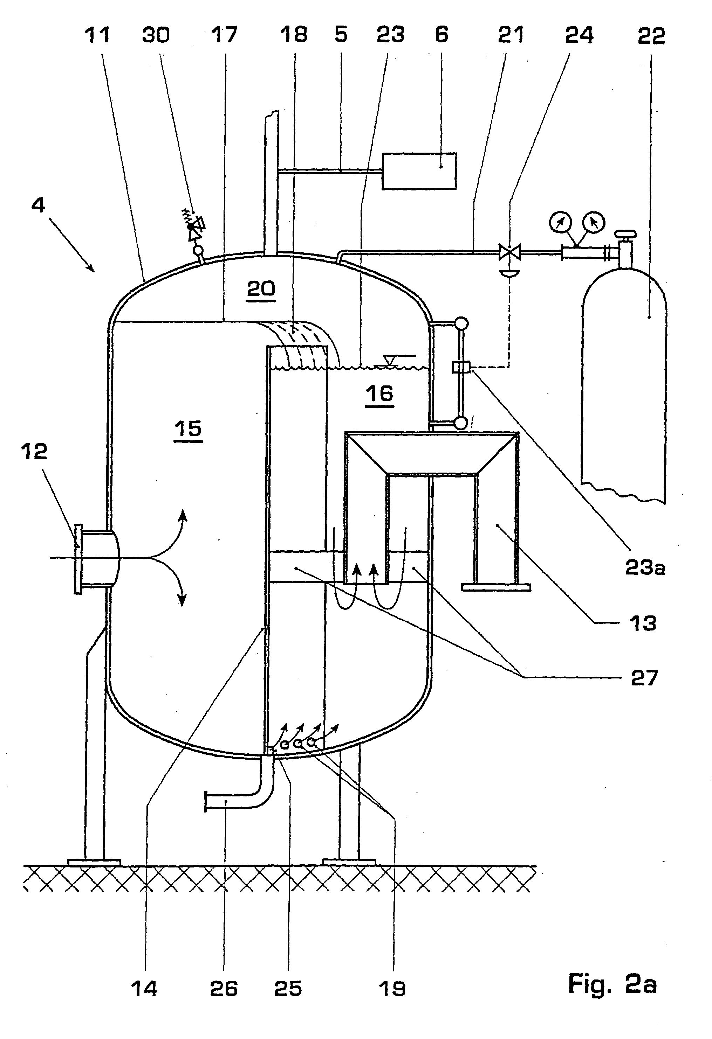

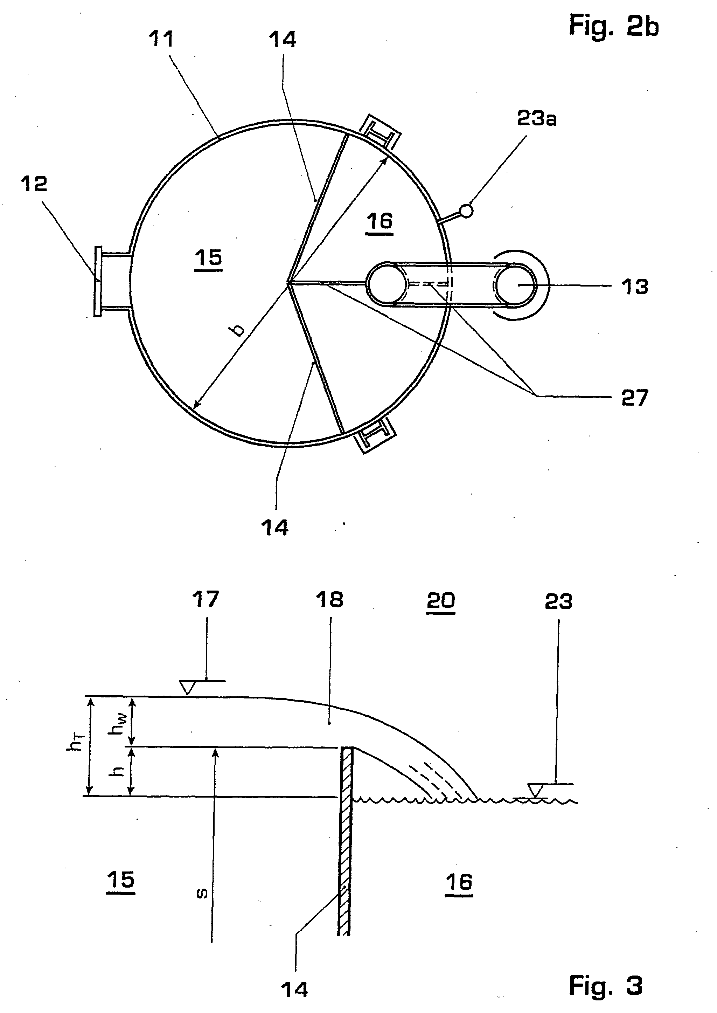

Figur 2a zeigt eine bevorzugte Ausführung des erfindungsgemässen Gas-Flüssigkeits-Trennapparates 4 wie er im Kühlwasserkreislauf von Figur 1a und im Heizwasserkreislauf von Figur 1 b zur Anwendung kommt. Er besteht aus einem Behälter 11 mit einem Wassereinlauf 12 und Wasserauslauf 13. Das Innere des Behälters 11 ist durch eine Trennwand 14 in zwei Kammern aufgeteilt, eine Wassereintrittskammer 15 und eine Wasseraustrittskammer 16. Die Trennwand 14 verläuft vom Boden des Behälters bis zu einer vorgegebenen Höhe, wobei sie den oberen Abschluss des Behälters nicht erreicht und somit ein wasserfreier Raum zwischen dem oberen Rand der Trennwand 14 und dem oberen Abschluss des Behälters 11 verbleibt. In diesem Ausführungsbeispiel ist die Trennwand 14 im Behälter derart angeordnet, dass das Volumen der Wassereintrittskammer 15 grösser ist als das Volumen der Wasseraustrittskammer 16. Die Trennwand 14 besitzt, wie in Figur 2b gezeigt, eine V-Form, wobei die Seite mit dem äusseren, grösseren Winkel der V-förmigen Trennwand 14 zusammen mit dem Mantel des Behälters 11 die Wassereintrittskammer 15 bildet, und die Seite mit dem inneren, kleineren Winkel der V-förmigen Trennwand 14 zusammen mit dem restlichen Mantel des Behälters 11 die Wasseraustrittskammer 16 bildet. Die V-Form der Trennwand und deren Anordnung bietet eine einfache Möglichkeit der Aufteilung des Behältervolumens auf die beiden Wasserkammern sowie auch die Realisierung einer grossen Überlaufbreite des Überlaufwehrs bei einem gegebenen Behälterquerschnitt. Die Trennwand 14 besitzt dank ihrer gewinkelten Form eine erhöhte Steifigkeit und kann Wasserstössen aus dem Wassereinlauf 12, sogenanntem water hammering", besser widerstehen.
Das Wasser fliesst durch den Wassereinlauf 12 in die Wassereintrittskammer 15. Diese dient insbesondere als Beruhigungsstrecke. Ein grosser Anteil des Wassers fliesst hier aufwärts, wobei sein Wasserspiegel 17 ruhig und glatt ist. Von dort fliesst es über den Rand der Trennwand 14 wie über ein Überlaufwehr 18 in die Wasseraustrittskammer 16. Der restliche, kleinere Anteil des Wassers fliesst in der Wassereintrittskammer 15 abwärts und gelangt über mehrere Öffnungen 19, beispielsweise einfache Bohrungen oder Blenden, die nahe dem Boden des Behälters angeordnet sind, ebenfalls in die Wasseraustrittskammer 16. Von dort verlässt das Wasser den Trennapparat 4 über den Wasserauslauf 13.

Das in die Wassereintrittskammer 15 eingeflossene Wasser steigt zum Beispiel zu einem Anteil von 80% aufwärts, während der kleinere Anteil von 20% nach unten strömt. Die Behälterdimensionen sind dabei so gewählt, dass die Aufstiegsgeschwindikgeit des Wassers beispielsweise 0.1 Meter pro Sekunde und die Geschwindigkeit des Wasserstroms nach unten 0.015 Meter pro Sekunde nicht überschreitet. Hierfür besitzt der Behälter in einer Ausführung einen Durchmesser von 1.5 Meter, wobei die Trennwand 14 einen Winkel von 140° in der Wasseraustrittskammer 16 und 220° in der Wassereintrittskammer 15 aufweist. Diese Aufteilung der Winkel und die Anordnung der Trennwand innerhalb des Behälters bezweckt, dass die Wassereintrittskammer 15 mehr Volumen umfasst, da dort auch die Gas-Flüssigkeitstrennung stattfindet.

In der Aufwärtsströmung des Wassers in der Wassereintrittskammer 15 werden darin verteilte Gasblasen mitgeführt, wobei diese sich mit einer Geschwindigkeit in bezug auf den Wasserstrom von 0.01 bis 0.25 Metern pro Sekunde aufwärts bewegen. Diese Relativgeschwindigkeit hängt von der Grösse der Gasblasen ab. Gasblasen mit einem Durchmesser von 1 Millimeter und mehr bewegen sich zum Beispiel mit einer Geschwindigkeit von 0.1 Metern pro Sekunde und mehr aufwärts. Kleinere Gasblasen steigen langsamer empor. Die relative Aufstiegsgeschwindigkeit von Gasblasen in Wasser mit einem Durchmesser von ca. 0.1 Millimeter beträgt 0.015 Meter pro Sekunde. Damit können im vorliegenden Beispiel Gasblasen mit einem Durchmesser von ca. 0.1 Millimetern und einer Relativgeschwindigkeit von 0.015 Metern pro Sekunde im Gleichgewicht mit dem abwärts fliessenden Wasserstrom sein, da der abwärts fliessende Wasserstrom ebenfalls eine Geschwindigkeit von 0.015 Metern pro Sekunde nach unten besitzt. Noch kleinere Blasen werden mit dem Abwärtsstrom nach unten mitgeführt und gelangen durch die Öffnungen 19 in die Wasseraustrittskammer 16. Die Abwärtsgeschwindigkeit begrenzt also zugleich die Grösse der nach unten mitgerissenen und dadurch nicht abgeschiedenen Gasblasen.
Die emporgestiegenen Gasblasen entweichen am ruhigen Wasserspiegel 17 in einen wasserfreien, gasgefüllten Raum 20. Dieser Raum 20 ist von einem Gas wie zum Beispiel Stickstoff, Kohlendioxid oder einem Inertgas gefüllt. Dieses Gas dient gleichzeitig als Vergleichsgas für den Gasdetektor 6. Von einem Gasbehälter 22 führt eine Gaszufuhrleitung 21 zum Trennapparat 4. Die Gaszufuhr und damit der Gasdruck im Raum 20 wird gemäss dem Wasserniveau 23 in der Wasseraustrittskammer 16 geregelt. Liegt das Wasserniveau 23 gemäss einem Niveaumessgerät 23a über einem vorgegebenen Sollwert, wird das Ventil 24 in der Gaszufuhrleitung 21, zum Beispiel unter der Signalgabe eines Reedsrelays, so lange geöffnet bis das Niveau infolge Druckanstieg auf den gewünschten Wert zurückgedrängt worden ist, wonach die Gaszufuhr durch Schliessen des Ventils 24 automatisch beendet wird. Der über der Oberfläche 17, 23 des Wassers gebildete gasgefüllte Raum 20 umfasst vorzugsweise ungefähr einen Zehntel des Gesamtvolumens des Trennapparates 4. Ein sehr kleiner Volumenstrom des im gasgefüllten Raum 20 befindlichen Gases wird dem Behälter 11 über die Gasentnahmeleitung 5 kontinuierlich entnommen und zum Gasdetektor 6 zwecks Detektion von Gasen, die von dem im Gasbehälter 22 befindlichen Vergleichsgas abweichen, geleitet.
Wie erwähnt, fliesst ein kleinerer Anteil, zum Beispiel 20% des Wasserstroms in der Wassereintrittskammer 15 abwärts und durch die Öffnungen 19 in die Wasseraustrittskammer 16. Gasblasen mit einem Durchmesser von weniger als 0.1 Millimetern werden dabei im vorliegenden Zahlenbeispiel mitgerissen, wobei diese für die Förderpumpe in der Regel kein Betriebsrisiko bedeuten.

Die Begrenzung der nach unten mitgerissenen Gasblasen ist von der Auslegung des Trennapparates 4 und des Volumenstroms abhängig. Andere Auslegungen des Trennapparates 4 führen zu einer anderen Aufteilung und anderen Auf- und Abstiegsgeschwindigkeiten des Wassers in der Wassereintrittskammer bzw. Wasseraustrittskammer und dadurch auch zu anderen Gasblasengrössen, die abscheidbar und detektierbar sind. Insbesondere wird die Aufteilung der Volumenströme in der Wassereintrittskammer durch die Querschnittsfläche der Öffnungen 19 und das Wasserniveau 23 in der Wasseraustrittskammer 16 bestimmt.

Eine Auslegung des Trennapparates 4 ist anhand von folgendem Beispiel dargestellt.
Ein Volumenstrom von 0.05 m³/s fliesst über den Wassereinlauf in den Trennapparat. Hiervon strömen 0.04 m³/s aufwärts und 0.01 m³/s abwärts mit Geschwindigkeiten von ungefähr 0.04 m/s nach oben bzw. 0.01 m/s nach unten. Aus Berechnungen beispielsweise nach W.J. Beek und M.K. Muttzall: Transport Phenomena, S. 101/106, Wiley and Sons (1975) ergibt sich, dass Gasblasen mit einem Durchmesser kleiner als 0.130 Millimeter nach unten mitgerissen werden. Die Dimensionen des Überlaufwehrs und der Öffnungen können nun beispielsweise nach W. Bohl: Technische Strömungslehre, S. 203-232, Vogel-Handbuch (1982) 5. Auflage bestimmt werden, wobei die dazugehörigen Grössen in Figur 3 dargestellt sind. Die Aufstiegsgeschwindigkeit des Wassers uᵤₚ verhält sich zum Reibungswert y des Wehrs, der Überlaufbreite b nach dem Ausführungsbeispiel (gleich dem Durchmesser des Behälters 11) und der Höhe des Überlaufes h_{w} gemäss
uᵤₚ ∼ y · b · (h_{w})^{3/2}, wobei y wiederum eine Funktion von h_{w} und der Gesamthöhe s der Trennwand ist.
Für die Querschnittsfläche A der Öffnungen gilt schliesslich die Beziehung zur Geschwindigkeit u_{down} des abwärts fliessenden Wassers gemäss
u_{down} = d · A · (Konstante · h_{T})^{1/2}, wobei d der Durchflusskoeffizient der Öffnung ist. Die Öffnungen in der Trennwand sollten so bemessen sein, dass die Geschwindigkeit des abwärts strömenden Wassers die Aufstiegsgeschwindigkeit der kleinsten noch abzuscheidenden Gasblasen nicht übersteigt. Gemäss Figur 3 ist die Grösse h_{T}, also die Höhe des Wasserspiegels in der Wassereintrittskammer über dem Wasserniveau in der Wasseraustrittskammer, gleich der Summe aus der Höhe des Überlaufes h_{w} und der Höhe h der Trennwand über dem Wasserniveau in der Wasseraustrittskammer.
Aus einer Auslegung nach dieser Art ergibt sich bei einem Behälterdurchmesser oder einer Überlaufbreite b von 1.5 Metern eine Überlaufhöhe des Wehrs h_{w} von 0.06 Metern, eine Höhe h von 0.05 Metern und eine Querschnittsfläche der Öffnungen von 0.013 m². Dabei ist zu bemerken, dass Variationen des Volumenstroms von 30% diese berechneten Parameterwerte wenig ändern.

Schliesslich ist am Boden des Behälters eine Öffnung 25, welche in einen Drainagestutzen 26 mündet und einer Stillstandsentleerung des Behälters dient. Der Wasserauslauf 13 aus der Wasseraustrittskammer 16 ist in der Form eines mit den Schenkeln nach unten gerichteten U-Rohrs realisiert, wovon der eine Schenkel im Innern des Behälters mittels zwei Befestigungsplatten 27 mit der Trennwand 14 und der inneren Wand des Behälters 11 verschweisst ist. Die Befestigungsplatten 27 dienen einerseits der möglichst drallfreien Strömungsführung in den Wasserauslauf 13 und anderseits der Festigkeit im Fall eines "water hammering".
Die Wasseraustrittskammer 16 ist weiter so ausgelegt, dass in ihr strömungstechnisch kein Drall entsteht. Hierzu wird der hydraulische Durchmesser dₕ der Wasseraustrittskammer 16 mit Hilfe der Froude-Zahl Fr und der Auslaufgeschwindigkeit uₒᵤₜ des Wassers aus der Kammer bestimmt, wobei Fr = uₒᵤₜ / (g · dₕ)^{1/2} und g die Erdbeschleunigung ist. Die Grösse dₕ ist der hydraulische Durchmesser der Wasseraustrittskammer 16, welcher durch dₕ = 4 · A_{g} / Pₑ gegeben ist, wobei A_{g} die Querschnittsfläche der Wasseraustrittskammer 16 und Pₑ der benetzte Umfang der Wasseraustrittskammer ist. Eine drallfreie Strömung in der Wasseraustrittskammer wird insbesondere dann erreicht, wenn die Froude-Zahl Fr ≤ 0.3 ist.

Der erfindungsgemässe Trennapparat findet ferner Anwendung in einem Wasserkreislauf mit einem Wärmeübertager, der als Taupunktheizer ausgebildet ist, sowie in einem System für die Generatorkühlung mittels Wasserstoff.

Die Erfindung ist ferner unabhängig von Form, Anordnung, beispielsweise horizontaler oder vertikaler Anordnung, und Bauweise des Behälters 11.

### Bezugszeichenliste

- 1: Förderpumpe
- 2: Wasser-Wasserkühler
- 3: Erdgaswärmeübertrager
- 3a: Gaskompressor
- 3b: Leitung
- 4: Gas-Flüssigkeits-Trennapparat oder Trennapparat
- 5: Gasentnahmeleitung
- 6: Gasdetektor
- 7: Wärmeübertrager
- 11: Behälter
- 12: Wassereinlauf
- 13: Wasserauslauf
- 14: Trennwand
- 15: Wassereintrittskammer
- 16: Wasseraustrittskammer
- 17: Wasserspiegel in Wassereintrittskammer
- 18: Überlaufwehr
- 19: Öffnungen
- 20: wasserfreier, gasgefüllter Raum
- 21: Gaszufuhrleitung
- 22: Gasbehälter
- 23: Wasserniveau in Wasseraustrittskammer
- 23a: Niveaumessgerät
- 24: Ventil
- 25: Öffnung
- 26: Drainagestutzen
- 27: Befestigungsplatten
- 30: Sicherheitsventil
- 50: Gasturbine
- 51: Abgasleitung
- 52: Abhitzekessel
- 53: Kamin
- 55: Speisewasserleitung
- 56: Niederdruckbereich
- 57: Hochdruckbereich
- 60: erste Leitung
- 61: zweite Leitung
- 62: Wärmeübertrager
- 63: Rücklaufleitung
- 64: Brennstoffleitung
- 70: Brennkammer
- s: Höhe der Trennwand
- h: Höhe der Trennwand über dem Wasserniveau in der Wasseraustrittskammer
- h_{w}: Höhe des Überlaufes in der Wassereintrittskammer
- h_{T}: Höhe des Wasserspiegels in der Wassereintrittskammer über dem Wasserspiegel
in der Wasseraustrittskammer

## Patentansprüche

1. Gas-Flüssigkeits-Trennapparat (4), der in einem Wasserkreislauf in einem Brennstoffsystem für eine Gasturbinenanlage angeordnet ist, wobei der Wasserkreislauf einen Wärmeübertrager für eine Kühlung oder eine Erwärmung von gasförmigem Brennstoff mittels Wasser aufweist,
mit einem Behälter (11), einem Wassereinlauf (12), einem Wasserauslauf (13) und einer Gasentnahmeleitung (5), die zu einem Gasdetektor (6) führt,
**dadurch gekennzeichnet, dass**
der Behälter (11) des Gas-Flüssigkeits-Trennapparats (4) in seinem Innern durch eine Trennwand (14) in eine Wassereintrittskammer (15) und eine Wasseraustrittskammer (16) aufgeteilt ist, die mindestens im oberen Bereich des Behälters hydraulisch miteinander verbunden sind
und der Wassereinlauf (12) in die Wassereintrittskammer (15) und der Wasserauslauf (13) aus der Wasseraustrittskammer (16) führt, und wobei im Betrieb, in der Wassereintrittskammer (15) eine nach oben gerichtete, wirbelfreie Strömung und in der Wasseraustrittskammer (16) eine drallfreie Strömung in den Wasserauslauf (13) besteht, und der Gas-Flüssigkeits-Trennapparat (4) an seinem oberen Abschluss eine Leitung (21) aufweist für die Zufuhr von Gas in den Behälter (11), und wobei im Betrieb, über dem Wasser im Behälter (11) ein gasgefüllter Raum (20) besteht, wodurch das Wasser eine freie Oberfläche (17, 23) aufweist.

2. Gas-Flüssigkeits-Trennapparat (4) nach Anspruch 1,
**dadurch gekennzeichnet, dass**
die Trennwand (14) mit dem Boden des Behälters des Gas-Flüssigkeits-Trennapparats (4) dicht verbunden ist, wobei zwischen dem oberen Rand der Trennwand (14) und dem oberen Abschluss des Behälters (11) ein freier Raum besteht, und über dem oberen Rand der Trennwand (14) ein Überlaufwehr (18) besteht, über welches das Wasser von der Wassereintrittskammer (15) in die Wasseraustrittskammer (16) fliesst.

3. Gas-Flüssigkeits-Trennapparat (4) nach Anspruch 1,
**dadurch gekennzeichnet, dass**
die Trennwand (14) mit dem Boden des Behälters des Gas-Flüssigkeits-Trennapparats (4) dicht verbunden ist, und die Trennwand (14) in ihrem oberen Bereich mindestens eine Öffnung aufweist, die von der Wassereintrittskammer (15) zur Wasseraustrittskammer (16) führt.

4. Gas-Flüssigkeits-Trennapparat (4) nach Anspruch 2 oder 3,
**dadurch gekennzeichnet, dass**
die Trennwand (14) in ihrem unteren Bereich Öffnungen (19) aufweist, und in der Wassereintrittskammer (15) eine zusätzliche vom Wassereinlauf (13) nach unten gerichtete Strömung besteht, die durch die Öffnungen (19) in die Wasseraustrittskammer (16) und von dort in den Wasserauslauf (13) des Behälters (11) führt.

5. Gas-Flüssigkeits-Trennapparat (4) nach Anspruch 4,
**dadurch gekennzeichnet, dass**
zur Regelung des Wasserniveaus (23) in der Wasseraustrittskammer (16) in der Leitung (21) zur Zufuhr des Gases in den Behälter (11) ein Druckventil (24) und in der Wasseraustrittskammer (16) ein Niveaumessgerät (23a) angeordnet ist.

6. Gas-Flüssigkeits-Trennapparat (4) nach Anspruch 5,
**dadurch gekennzeichnet, dass**
die Trennwand (14) in ihrem horizontalen Querschnitt V-förmig ist, wobei die innere Wand der V-förmigen Trennwand (14) zusammen mit der Innenwand des Behälters (11) die Wasseraustrittskammer (16) und die äussere Wand der V-förmigen Trennwand (14) zusammen mit der Innenwand des Behälters (11) die Wassereintrittskammer (15) bildet.

7. Gas-Flüssigkeits-Trennapparat (4) nach Anspruch 6,
**dadurch gekennzeichnet, dass**
die Trennwand (14) eine zick-zack-förmige Wehrlinie aufweist.

8. Gas-Flüssigkeits-Trennapparat (4) nach Anspruch 5,
**dadurch gekennzeichnet, dass**
die Trennwand (14) in der Form eines Zylindermantels gestaltet ist.

9. Gas-Flüssigkeits-Trennapparat (4) nach einem der Ansprüche 6 bis 8,
**dadurch gekennzeichnet, dass**
an dem Behälter (11) des Gas-Flüssigkeits-Trennapparats (4) ein Sicherheitsventil (30) zum Schutz des Behälters (11) vor unzulässigem Druck angeordnet ist.

10. Gas-Flüssigkeits-Trennapparat (4) nach Anspruch 9,
**dadurch gekennzeichnet, dass**
der Wasserauslauf (13) aus einem U-Rohr besteht, wobei der erste Schenkel im Innern des Behälters (11) und der zweite Schenkel ausserhalb des Behälters (11) angeordnet ist.

11. Gas-Flüssigkeits-Trennapparat (4) nach Anspruch 10,
**dadurch gekennzeichnet, dass**
in der Wasseraustrittskammer (16) Platten (27) angeordnet sind zur Befestigung des U-Rohrs des Wasserauslaufs (13) an der inneren Wand des Behälters (11) und der Trennwand (14) sowie zur drallfreien Führung des Wassers in das U-Rohr.

12. Verfahren zur Abscheidung von Gas aus Wasser in einem Wasserkreislauf eines Wärmeübertragers in einem Brennstoffsystem einer Gasturbinenanlage wobei das Wasser über einen Wassereinlauf (12) in einen Behälter (11) geleitet wird,
**dadurch gekennzeichnet, dass**
in einer Wassereintrittskammer (15) im Behälter (11), ein Volumenstrom mit gleichmässiger Geschwindigkeit nach oben strömt und über eine hydraulische Verbindung in eine Wasseraustrittskammer (16) fliesst, die von der Wassereintrittskammer (15) durch eine Trennwand (14) getrennt ist, und in der Wasseraustrittskammer (16) drallfrei in einen Wasserauslauf (13) strömt, und im Wasser disperse Gasblasen in der Wassereintrittskammer (15) vom aufsteigenden Wasserstrom mitgetragen werden und an der freien Oberfläche einer Beruhigungsstrecke in der Wassereintrittskammer (15) aus dem Wasser in einen gasgefüllten Raum (20) über der Wasseroberfläche entweichen und von einem Gasdetektor (6) detektiert werden, wobei die freie Oberfläche der Beruhigungsstrecke durch den Gasdruck im gasgefüllten Raum (20) erzwungen wird.

13. Verfahren nach Anspruch 12
**dadurch gekennzeichnet, dass**
das Wasserniveau (23) in der Wasseraustrittskammer (16) durch ein Ventil (24) in der Leitung (21) für die Zufuhr von Gas und damit dem Gasdruck geregelt wird und unter der hydraulischen Verbindung zwischen der Wassereintrittskammer (15) und der Wasseraustrittskammer (16) gehalten wird.

14. Verfahren nach Anspruch 12
**dadurch gekennzeichnet, dass**
die Aufstiegsgeschwindigkeit des Volumenstroms in der Wassereintrittskammer (15) durch ein möglichst grosses Volumen der Wassereintrittskammer (15) möglichst gering gehalten wird und die Reynoldszahl der Strömung in der Wassereintrittskammer Re < 700 ist.

15. Verfahren nach Anspruch 12
**dadurch gekennzeichnet, dass**
die Querströmung in der Beruhigungsstrecke durch eine möglichst grosse hydraulische Verbindung zwischen der Wassereintrittskammer (15) und der Wasseraustrittskammer (16) möglichst gering gehalten wird.

16. Verfahren nach Anspruch 12
**dadurch gekennzeichnet, dass**
für eine drallfreie Strömung durch den Wasserauslauf (13) aus der Wasseraustrittskammer (16) die Froudezahl der Strömung Fr ≤ 0.3 ist.

17. Verfahren nach Anspruch 12
**dadurch gekennzeichnet, dass**
durch Öffnungen (19) in der Trennwand (14) zwischen der Wassereintrittskammer (15) und der Wasseraustrittskammer (16) im unteren Bereich des Behälters (11) ein nach unten fliessender Volumenstrom in der Wassereintrittskammer (15) erzeugt wird und der in der Wassereintrittskammer (15) nach oben fliessende Volumenstrom und nach unten fliessende Volumenstrom sowie deren Geschwindigkeiten durch die Querschnittsfläche der Öffnungen (19) und das Wasserniveau (23) in der Wasseraustrittskammer (16) bestimmt werden.

## Claims

1. Gas/liquid separation apparatus (4) which is arranged in a water circuit in a fuel system for a gas turbine plant, the water circuit having a heat exchanger for cooling or heating gaseous fuel by means of water, having a container (11), a water inlet (12), a water outlet (13) and a gas extraction line (5) which leads to a gas detector (6), **characterized in that** the container (11) of the gas/liquid separation apparatus (4) is split up in its interior by a partition (14) into a water entry chamber (15) and a water exit chamber (16) which are hydraulically interconnected at least in the upper region of the container, and the water inlet (12) leads into the water entry chamber (15) and the water outlet (13) leads from the water exit chamber (16), and there being, in operation, an upwardly directed, non-turbulent flow in the water entry chamber (15) and an irrotational flow into the water outlet (13) in the water exit chamber (16), and the gas/liquid separation apparatus (4) has at its upper termination a line (21) for feeding gas into the container (11), and there being, in operation, a gas-filled space (20) above the water in the container (11), the water thereby having a free surface (17, 23).

2. Gas/liquid separation apparatus (4) according to Claim 1, **characterized in that** the partition (14) is tightly connected to the base of the container of the gas/liquid separation apparatus (4), there being a free space between the upper edge of the partition (14) and the upper termination of the container (11), and there being above the upper edge of the partition (14) an overflow weir (18) via which the water flows from the water entry chamber (15) into the water exit chamber (16).

3. Gas/liquid separation apparatus (4) according to Claim 1, **characterized in that** the partition (14) is tightly connected to the base of the container of the gas/liquid separation apparatus (4), and the partition (14) has in its upper region at least one opening which leads from the water entry chamber (15) to the water exit chamber (16).

4. Gas/liquid separation apparatus (4) according to Claim 2 or 3, **characterized in that** the partition (14) has openings (19) in its lower region, and there is in the water entry chamber (15) an additional flow which is directed downward from the water inlet (13) and leads through the openings (19) into the water exit chamber (16) and, from there, into the water outlet (13) of the container (11).

5. Gas/liquid separation apparatus (4) according to Claim 4, **characterized in that** for the purpose of controlling the water level (23) in the water exit chamber (16) a pressure control valve (24) is arranged in the line (21) for feeding the gas into the container (11), and a level-measuring unit (23a) is arranged in the water exit chamber (16).

6. Gas/liquid separation apparatus (4) according to Claim 5, **characterized in that** the partition (14) is of V-shaped horizontal cross section, the inner wall of the V-shaped partition (14) forming the water exit chamber (16) together with the inner wall of the container (11), and the outer wall of the V-shaped partition (14) forming the water entry chamber (15) together with the inner wall of the container (11).

7. Gas/liquid separation apparatus (4) according to Claim 6, **characterized in that** the partition (14) has a zig zag weir line.

8. Gas/liquid separation apparatus (4) according to Claim 5, **characterized in that** the partition (14) is shaped in the form of a cylinder envelope.

9. Gas/liquid separation apparatus (4) according to one of Claims 6 to 8, **characterized in that** a safety valve (30) for protecting the container (11) against impermissible pressure is arranged on the container (11) of the gas/liquid separation apparatus (4).

10. Gas/liquid separation apparatus (4) according to Claim 9, **characterized in that** the water outlet (13) comprises a U tube, the first limb being arranged in the interior of the container (11), and the second limb being arranged outside the container (11).

11. Gas/liquid separation apparatus (4) according to Claim 10, **characterized in that** plates (27) are arranged in the water exit chamber (16) for the purpose of fastening the U tube of the water outlet (13) on the inner wall of the container (11) and the partition (14) and for irrotationally guiding the water into the U tube.

12. Process for separating gas from water in a water circuit of a heat exchanger in a fuel system of a gas turbine plant, the water being led via a water inlet (12) into a container (11) **characterized in that** in the container (11) a volumetric flow flows upward in a water entry chamber (15) at uniform speed, and flows via a hydraulic connection into a water exit chamber (16) which is separated from the water entry chamber (15) by a partition (14), and flows irrotationally in the water exit chamber (16) into a water outlet (13), and gas bubbles disperse in water are entrained in the water entry chamber (15) by the rising water flow and escape from the water, at the free surface of a calming section in the water entry chamber (15), into a gas-filled space (20) above the water surface, and are detected by a gas detector (6), the free surface of the calming section being defined by the gas pressure in the gas-filled space (20).

13. Process according to Claim 12, **characterized in that** the water level (23) in the water exit chamber (16) and thus the gas pressure is controlled by a valve (24) in the line (21) for feeding gas, and is kept below the hydraulic connection between the water entry chamber (15) and the water exit chamber (16).

14. Process according to Claim 12, **characterized in that** the rate of rise of the volumetric flow in the water entry chamber (15) is kept as low as possible by as large a volume as possible of the water entry chamber (15), and the Reynolds number of the flow in the water entry chamber is Re < 700.

15. Process according to Claim 12, **characterized in that** the cross flow in the calming section is kept as slight as possible by as large as possible a hydraulic connection between the water entry chamber (15) and the water exit chamber (16).

16. Process according to Claim 12, **characterized in that** the Froude's number of the flow is Fr ≤ 0.3 for an irrotational flow through the water outlet (13) from the water exit chamber (16).

17. Process according to Claim 12, **characterized in that** a downward-flowing volumetric flow in the water entry chamber (15) is produced through openings (19) in the partition (14) between the water entry chamber (15) and the water exit chamber (16) in the lower region of the container (11), and the volumetric flow flowing upward in the water entry chamber (15) and the downward-flowing volumetric flow, as well as the speeds of said flows are determined by the cross-sectional area of the openings (19) and the water level (23) in the water exit chamber (16).

## Revendications

1. Appareil (4) pour séparer le gaz d'un liquide, disposé dans un circuit d'eau dans un système de combustible pour une installation de turbine à gaz, le circuit d'eau présentant un échangeur de chaleur pour un refroidissement ou un réchauffement de combustible gazeux au moyen d'eau,
comprenant un récipient (11), une entrée d'eau (12), une sortie d'eau (13) et une conduite de prélèvement de gaz (5) qui conduit à un détecteur de gaz (6),
**caractérisé en ce que**
le récipient (11) de l'appareil (4) pour séparer le gaz d'un liquide est divisé à l'intérieur par une paroi de séparation (14) en une chambre d'entrée d'eau (15) et une chambre de sortie d'eau (16), qui sont connectées hydrauliquement l'une à l'autre au moins dans la région supérieure du récipient et
l'entrée d'eau (12) conduit dans la chambre d'entrée d'eau (15) et la sortie d'eau (13) conduit hors de la chambre de sortie d'eau (16), et en fonctionnement, un écoulement orienté vers le haut, sans tourbillon, existant dans la chambre d'entrée d'eau (15), et un écoulement sans rotation existant dans la sortie d'eau (13) dans la chambre de sortie d'eau (16), et l'appareil (4) pour séparer le gaz d'un liquide présentant, au niveau de sa fermeture supérieure, une conduite (21) pour l'alimentation en gaz dans le récipient (11), et en fonctionnement un espace rempli de gaz (20) existant au-dessus de l'eau dans le récipient (11), l'eau présentant une surface libre (17, 23).

2. Appareil (4) pour séparer le gaz d'un liquide selon la revendication 1,
**caractérisé en ce que**
la paroi de séparation (14) est connectée hermétiquement avec le fond du récipient de l'appareil (4) pour séparer le gaz d'un liquide, un espace libre existant entre le bord supérieur de la paroi de séparation (14) et la fermeture supérieure du récipient (11), et un déversoir de débordement (18) existant au-dessus du bord supérieur de la paroi de séparation (14), par le biais duquel l'eau provenant de la chambre d'entrée d'eau (15) s'écoule dans la chambre de sortie d'eau (16).

3. Appareil (4) pour séparer le gaz d'un liquide selon la revendication 1,
**caractérisé en ce que**
la paroi de séparation (14) est connectée hermétiquement au fond du récipient de l'appareil (4) pour séparer le gaz d'un liquide, et la paroi de séparation (14) présente, dans sa région supérieure, au moins une ouverture qui conduit de la chambre d'entrée d'eau (15) à la chambre de sortie d'eau (16).

4. Appareil (4) pour séparer le gaz d'un liquide selon la revendication 2 ou 3,
**caractérisé en ce que**
la paroi de séparation (14) présente, dans sa région inférieure, des ouvertures (19) et il existe, dans la chambre d'entrée d'eau (15) un écoulement supplémentaire orienté vers le bas depuis l'entrée d'eau (12), qui conduit à travers les ouvertures (19) dans la chambre de sortie d'eau (16) et de là dans la sortie d'eau (13) du récipient (11).

5. Appareil (4) pour séparer le gaz d'un liquide selon la revendication 4,
**caractérisé en ce que**
pour la régulation du niveau d'eau (23) dans la chambre de sortie d'eau (16), une soupape de pression (24) est disposée dans la conduite (21) pour l'alimentation en gaz du récipient (11) et un appareil de mesure de niveau (23a) est disposé dans la chambre de sortie d'eau (16).

6. Appareil (4) pour séparer le gaz d'un liquide selon la revendication 5,
**caractérisé en ce que**
la paroi de séparation (14) est en forme de V en section transversale horizontale, la paroi intérieure de la paroi de séparation en forme de V (14) formant conjointement avec la paroi intérieure du récipient (11) la chambre de sortie d'eau (16) et la paroi extérieure de la paroi de séparation en forme de V (14) formant conjointement avec la paroi intérieure du récipient (11) la chambre d'entrée d'eau (15).

7. Appareil (4) pour séparer le gaz d'un liquide selon la revendication 6,
**caractérisé en ce que**
la paroi de séparation (14) présente une ligne de déversoir en forme de zigzag.

8. Appareil (4) pour séparer le gaz d'un liquide selon la revendication 5,
**caractérisé en ce que**
la paroi de séparation (14) est configurée en forme d'enveloppe de cylindre.

9. Appareil (4) pour séparer le gaz d'un liquide selon l'une quelconque des revendications 6 à 8,
**caractérisé en ce qu'**
une soupape de sécurité (30) pour protéger le récipient (11) contre une pression inadmissible est disposée sur le récipient (11) de l'appareil (4) pour séparer le gaz d'un liquide.

10. Appareil (4) pour séparer le gaz d'un liquide selon la revendication 9,
**caractérisé en ce que**
la sortie d'eau (13) se compose d'un tube en forme de U, la première branche étant disposée à l'intérieur du récipient (11) et la deuxième branche étant disposée à l'extérieur du récipient (11).

11. Appareil (4) pour séparer le gaz d'un liquide selon la revendication 10,
**caractérisé en ce que**
des plaques (27) sont disposées dans la chambre de sortie d'eau (16) pour la fixation du tube en forme de U de la sortie d'eau (13) à la paroi intérieure du récipient (11) et de la paroi de séparation (14) ainsi que pour le guidage sans rotation de l'eau dans le tube en forme de U.

12. Procédé pour séparer le gaz de l'eau dans un circuit d'eau d'un échangeur de chaleur dans un système de combustible d'une installation de turbine à gaz, dans lequel l'eau est guidée par le biais d'une entrée d'eau (12) dans un récipient (11),
**caractérisé en ce qu'**
un courant volumique s'écoule avec une vitesse uniforme vers le haut dans une chambre d'entrée d'eau (15) dans le récipient (11) et s'écoule par le biais d'une liaison hydraulique dans une chambre de sortie d'eau (16) qui est séparée de la chambre d'entrée d'eau (15) par une paroi de séparation (14), et s'écoule dans la chambre de sortie d'eau (16) sans rotation dans une sortie d'eau (13), et les bulles de gaz dispersées dans l'eau sont entraînées dans la chambre d'entrée d'eau (15) par le courant d'eau montant et s'échappent au niveau de la surface libre d'une section de stabilisation dans la chambre d'entrée d'eau (15) hors de l'eau dans un espace rempli de gaz (20) au-dessus de la surface de l'eau et sont détectées par un détecteur de gaz (6), la surface libre de la section de stabilisation étant obtenue de manière forcée par la pression de gaz dans l'espace rempli de gaz (20).

13. Procédé selon la revendication 12,
**caractérisé en ce que**
le niveau d'eau (23) dans la chambre de sortie d'eau (16) est régulé par une soupape (24) dans la conduite (21) pour l'alimentation en gaz et de ce fait en pression de gaz et est maintenu sous la liaison hydraulique entre la chambre d'entrée d'eau (15) et la chambre de sortie d'eau (16).

14. Procédé selon la revendication 12,
**caractérisé en ce que**
la vitesse de montée du courant volumique dans la chambre d'entrée d'eau (15) est maintenue aussi faible que possible par un volume aussi grand que possible de la chambre d'entrée d'eau (15) et le nombre de Reynolds de l'écoulement dans la chambre d'entrée d'eau Re est < 700.

15. Procédé selon la revendication 12,
**caractérisé en ce que**
l'écoulement transversal dans la section de stabilisation est maintenu aussi faible que possible par une liaison hydraulique aussi grande que possible entre la chambre d'entrée d'eau (15) et la chambre de sortie d'eau (16).

16. Procédé selon la revendication 12,
**caractérisé en ce que**
pour un écoulement sans rotation à travers la sortie d'eau (13) hors de la chambre de sortie d'eau (16), le nombre de Froude de l'écoulement est Fr ≤ 0,3.

17. Procédé selon la revendication 12,
**caractérisé en ce que**
par des ouvertures (19) dans la paroi de séparation (14) entre la chambre d'entrée d'eau (15) et la chambre de sortie d'eau (16) dans la région inférieure du récipient (11), il se crée un courant volumique s'écoulant vers le bas dans la chambre d'entrée d'eau (15), et le courant volumique s'écoulant vers le haut dans la chambre d'entrée d'eau (15), le courant volumique s'écoulant vers le bas ainsi que leurs vitesses sont déterminés par la surface en section transversale des ouvertures (19) et par le niveau d'eau (23) dans la chambre de sortie d'eau (16).
